# EUROPEAN PATENT APPLICATION

(11) **EP 1 570 718 A1**
(43) Date of publication of application: **07.09.2005**
(21) Application number: 05075512.3
(22) Date of filing: 02.03.2005
(51) Int. Cl.: A01D 34/535

(54) **Flail mower**

(30) Priority: 06.03.2004 GB 0405144
(71) Applicant: Spearhead Machinery Ltd., Pershore, Worcestershire WR10 2DD (GB)
(72) Inventor: Lole, Christopher Martin Spearhead Machinery Ltd., Pershore Worcestershire, WR10 2DD (GB)
(74) Representative: W.P. Thompson & Co.

(57) **Abstract**

A flail mower comprises a rotary body (1), at least one boot flail (5) and a link (4) for linking each boot flail to the rotary body so as to be capable of rotation about an axis substantially parallel to the rotational axis of the rotary body and spaced from the outer surface of the rotary body. Each boot flail (5) comprises a sole (8) having a striking edge (9) at the forward end thereof and a heel at the rearward end thereof and a flange (7) extending substantially perpendicular to the sole (8). The flange (7) has an aperture (6) in it through which the link (4) passes to secure the boot flail to the rotary body. The aperture (6) in the flange (7) is generally elongate and extends in the direction of the sole (8) and the link is able to slide within the aperture from one end thereof to the other as the flail body counter-rotates on being overloaded. The edge of the elongate aperture (6) and the edge of the flange (7) remote from the striking edge (9) are curved outwardly with respect to the striking edge (9) such that the boot flail (5) has a tendency to return to its normal position with the link (4) positioned at the end of the elongate aperture (6) remote from the sole (8) when overloading thereof ceases.

## Description

The present invention relates to machinery for the maintenance of vegetation on verges, banks, hedges, grassland and the like. We refer in particular to machinery in which the cutting head comprises a rotating cylindrical body with axis generally parallel to the surface being cut. Flails project centrifugally from the said body, and the striking edge of each flail serves to sever excess vegetation. We refer to such machines as flail mowers.

Each flail usually incorporates one or more pivoting joints, which provide flexibility during recoil from impact. Flails are made of different shapes and arrangements of jointing according to the intended duty and type of vegetation. In flail mowers intended for the duties mentioned it is usual for the flails to be pivoted to the cylindrical body, or rotor, at short projections welded to its surface.

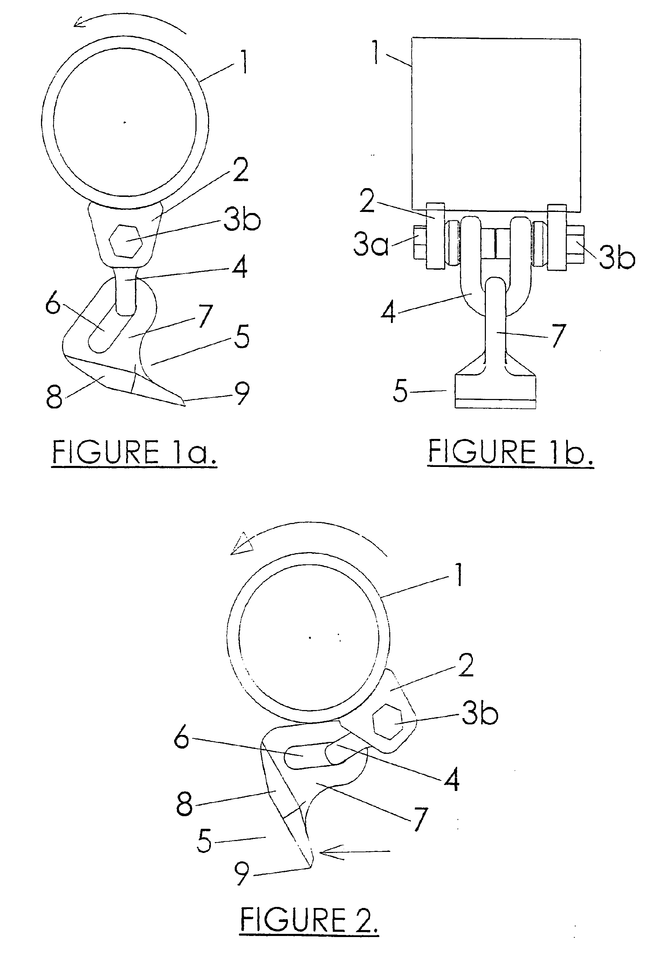

The present invention refers to a type of flail that is found in practice to work effectively with a range of different types of vegetation - a general purpose tool. It is convenient to refer to this as a boot flail. Subject to minor variations, all boot flails presently known can be represented as indicated in Figures 1a and 1b, which are two views of a boot flail mounted on a rotor. Figure 1a is a side elevation of the flail and Figure 1b is a front elevation of the flail. Figure 2 is a side elevation of a flail of the known type when fully deflected by severe impact, i.e. when overloaded.

In Figures 1a and 1b the rotor 1 carries lugs 2 that support pivot bolts 3a and 3b with axes parallel to the axis of the rotor 1. The eyes of a shackle 4 are located on the bolts 3a and 3b.

The main component of such a flail assembly is the boot-shaped body 5, which we may refer to as the flail. The bend of the shackle 4 passes through a slot-shaped hole 6 in the flange 7, which flange is fixed as indicated to the striking plate 8, which we may refer to as the sole. The striking plate 8 terminates in the striking edge 9.

When the rotor 1 is rotating, the flail assembly is extended centrifugally as drawn in Figure 1a, one end of the hole 6 being engaged against the shackle 4. We term this the loop end. When striking edge 9 collides with an obstruction, the loop end of the hole 6 remains engaged against the shackle 4 and the body 5 recoils from the collision. Because the loop end of the hole 6 is always engaged against the shackle 4, the slot portion of the hole 6 plays no part in the action of the flail assembly. In the known art the only purpose served by the slot is facilitation of assembly of the body 5 to the shackle 4.

Figure 2 shows a flail of the known type deflected by overload to an extreme position. The striking edge 9 projects well above the surface of the rotor 1. If the obstruction that caused the deflection is higher than a critical size, the striking edge 9 re-engages the obstruction as the rotor motion continues; but the flail cannot recoil further, a condition likely to cause damage to the body 5. The loop end of hole 6 suffers extra stress as an overload collision reverses the direction of motion of the striking edge 9. In equipment that has been subject to heavy duty, besides damage to the edge 9, fractures occur at the loop end of hole 6. Also in equipment that has been subject to heavy duty, it has been noted that the surface of the rotor suffers damage from the back of the body 5 impacting the rotor 1, as indicated in Figure 2.

With boot-type flails, breakage is common when obstructions such as the projecting tips of large stones buried in grassland are encountered. Broken flails can escape the rotor housing at speeds liable to cause severe injury to bystanders.

It is the aim of the present invention to provide means whereby a boot-shaped flail can recoil from overload collision in a manner avoiding excess stress in the flail body, its configuration during recoil providing improved clearance from obstructions, the assembly subsequently resetting automatically.

According to the present invention there is provided a flail mower comprising a rotary body, at least one boot flail and a link for linking each boot flail to the rotary body so as to be capable of rotation about an axis substantially parallel to the rotational axis of the rotary body and spaced from the outer surface of the rotary body, wherein each boot flail comprises a sole having a striking edge at the forward end thereof and a heel at the rearward end thereof and a flange extending substantially perpendicular to the sole, the flange having an aperture therein through which the said link passes to secure the boot flail to the rotary body, and the aperture in the flange is generally elongate and extends in the direction of the sole and the link is able to slide within the aperture from one end thereof to the other as the flail body counter-rotates on being overloaded, characterised in that the edge of the elongate aperture and the edge of the flange remote from the striking edge are curved outwardly with respect to the striking edge.

Counter-rotation occurs when a flail according to the invention collides with a resistant obstruction. The energy of motion of the flail body is converted to energy of rotation as the flail body momentarily rotates about the point of impact at the striker edge. In that condition the tangential velocity of the rim of the aperture can exceed the velocity of the shackle: the rim of the aperture in the striker body begins to slide through the shackle. The kinetic energy of rotation of the flail body then tends to rotate it around the centre of dynamic balance. Thus, on obstructive overload the axis of rotation of the flail starts at the striking edge and shifts towards a central region. In so swivelling to an inverted position the striking edge is retracted towards the rotor, terminating as the heel of the striking plate contacts the rotor, in which position the striking edge is well away from the obstruction. Shortly afterwards the flail assembly is re-extended centrifugally.

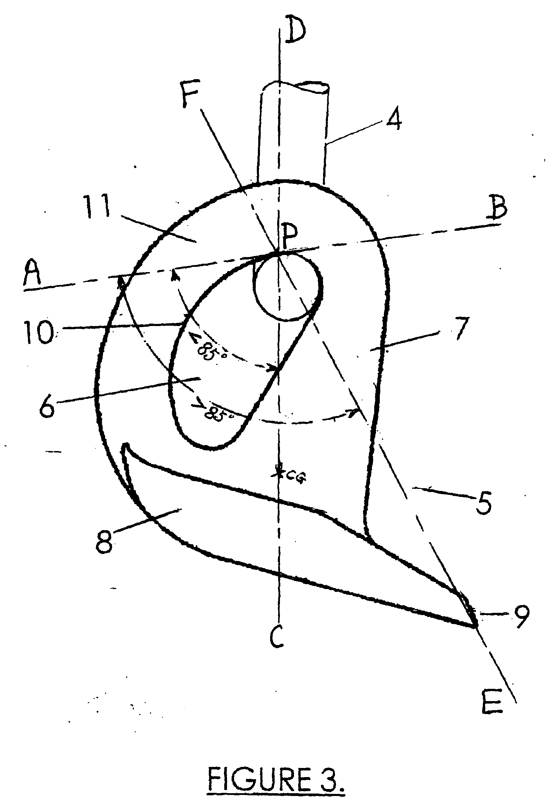

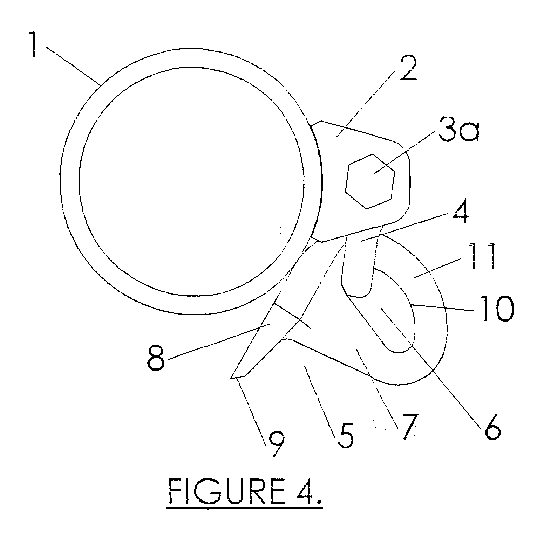

An example according to the invention is illustrated in Figures 3 and 4.

Figures 1a, 1b and 2 refer to the prior art described above, Figures 1a and 1b being side and front elevations of a conventional boot-type flail in an undisturbed state and Figure 2 being a representation of the same flail when fully deflected by an overload collision.

Figure 3 is a side elevation of an example of a flail body according to the invention. Note that the loop end of hole 6 constitutes a suspension bearing against the shackle 4. Figure 4 shows a flail assembly incorporating the invention. It is shown in a configuration resulting from an overload collision between the striking edge and a resistant obstruction.

In the example, although a single flail assembly is shown, in practice many such flail assemblies are mounted on the rotor. As drawn, the rotor 1 is rotating anticlockwise.

In Figure 3 the rim 11 of the flange 7 forms the boundary 10. The boundary 10 of the hole 6 is curved approximately in a radius to a point about halfway from the centre of the boundary 10 to the striking edge 9, the curvature increasing away from the loop end. The cross-sectional shape of the rim 11 conforms to the inside curve of the loop of the shackle 4. Each end of the hole 6 is semi-circular to match the section of the shackle 4. The point P is where the boundary 10 meets the pressure area between the flail body 5 and the shackle 4 when subject to centrifugal action. The line CD passes through P and the centre of gravity of the body 5. AB is the tangent at P to the boundary 10 and EF is a line passing from the striking edge 9 to P. The condition for the flail 5 to remain firmly seated on the shackle when the cutter is freely rotating and when it is cutting at a normal rate of duty is that the angle APC should be less than 85°. The condition for the flail to start counter-rotating at the instant the striking edge is brought to rest by a resistant obstruction is that the angle APE be greater than 85°.

On the overload collision causing the inertia of the body 5 to suddenly counter rotate the loop end escapes the shackle 4, and rim 11 slides freely through the shackle 4. (We have found that during such impacts the velocity of the rim 11 can exceed the velocity of the shackle 4.)

In this way, a sufficiently robust obstruction deflects the body 5 until the heel of the sole 8 folds under the shackle 4, the sole 8 then lying approximately tangential to the surface of the rotor 1. The condition of substantial inversion is illustrated in Figure 4. The striking edge 9 is then clear of the obstruction by a greater distance than is possible for known boot flails. A fraction of a revolution of the rotor later the flail is restored to extended configuration by centrifugal action.

In the present example, as is represented in Figures 3 and 4, the heel, that is the end of the sole 8 remote from the striking edge 9, is dimensioned and rounded to enable that part of the body 5 to swivel freely under the shackle 4 in the event of the body 5 approaching the configuration shown in Figure 4.

By way of example we have described a simple collision between the striking edge 9 and an obstruction, assuming the impact to be in line with the plane of symmetry of the flail assembly. Obstructions met in practice can engage away from the plane of symmetry of the flail, adding a twisting action to the deflection. The wide central dimension of the hole 6 helps to accommodate twisting during recoil. Some obstructions can present a sloping surface that can generate an upward component to the flail recoil, tending to assist the motion of the rim 11 in sliding through the shackle 4.

In practical trials we have found that flails according to the invention withstand severe collisions, for example against a heavy steel bar, without damage or breakage. In the same conditions convention boot flails were damaged, some fracturing. There is a greater margin of safety when using flails according to the invention.

Examination of surface changes following these trials and trials cutting vegetation clearly indicated that the rims 11 of flail bodies 5 had been sliding through the shackles 4, and that the cutting edges 9 remained in good condition. In trials cutting vegetation we have found that flails according to the invention accumulate little or no deposit of plant and soil residue behind the cutting edge, whereas convention boot flails frequently foul in this way. Associated with this finding we have observed that the trimmed surface of vegetation appears more even and cleanly cut than with conventional boot flails.

## Claims

1. A flail mower comprising a rotary body (1), at least one boot flail (5) and a link (4) for linking each boot flail to the rotary body so as to be capable of rotation about an axis substantially parallel to the rotational axis of the rotary body and spaced from the outer surface of the rotary body, wherein each boot flail (5) comprises a sole (8) having a striking edge (9) at the forward end thereof and a heel at the rearward end thereof and a flange (7) extending substantially perpendicular to the sole (8), the flange (7) having an aperture (6) therein through which the said link (4) passes to secure the boot flail to the rotary body, and the aperture (6) in the flange (7) is generally elongate and extends in the direction of the sole (8) and the link is able to slide within the aperture from one end thereof to the other as the flail body counter-rotates on being overloaded, **characterised in that** the edge of the elongate aperture (6) and the edge of the flange (7) remote from the striking edge (9) are curved outwardly with respect to the striking edge (9).

2. A flail mower according to claim 1, wherein the curvature of the edge of the elongate aperture (6) is such that the boot flail (5) has a tendency to return to its normal position with the link (4) positioned at the end of the elongate aperture (6) remote from the sole (8) when the overloading thereof ceases.

3. A flail mower according to claim 2, wherein the edge of the elongate aperture (6) remote from the striking edge (9) meets the end of the elongate aperture (6) remote from the striking edge (9) at an angle less than 85° (in the angular sector facing the sole) to a line drawn through the centre of the said end and the centre of gravity of the boot flail and greater than 85° (in the angular sector facing the sole) to a line drawn through the centre of the said end and the striking edge (9).

4. A flail mower according to any of claims 1, 2 or 3, wherein the extremity of the edge of the aperture (6) remote from the striking edge (9) that is towards the sole (8) is generally semi-circular and the extremity of the outer edge of the flange (7) remote from the striking edge (9) that is towards the heel is radiused concentrically thereto.

5. A flail mower according to any preceding claim, wherein the distance between the edge of the flange (7) remote from the striking edge (9) and the centre of gravity of the flail reduces towards the heel.

6. A flail mower according to any preceding claim, wherein the curvature of the edge of the elongate aperture (6) remote from the striking edge (9) is such that at any point along its length the angle defined by a line drawn tangentially to the curvature at that point and a line drawn through the point and the centre of gravity of the flail is less than 85° (in the angular sector facing the sole).

7. A flail mower according to any preceding claim, wherein on overloading the flail counter-rotates so that the striking edge thereof lies in a plane lying substantially tangentially to the circumference of the rotary body.
